**Europäisches Patentamt**

**European Patent Office**

**Office européen des brevets**

(19)

(11) Numéro de publication : **0 039 639**
**B1**

(12)

# FASCICULE DE BREVET EUROPÉEN

(45) Date de publication du fascicule du brevet :
**05.10.83**

(21) Numéro de dépôt : **81400690.4**

(22) Date de dépôt : **30.04.81**

(51) Int. Cl.³ : **B 64 C 25/12**

(54) **Jambe d'atterrissage pour train d'atterrissage principal d'aéronef.**

(30) Priorité : **07.05.80 FR 8010163**

(43) Date de publication de la demande :
**11.11.81 Bulletin 81/45**

(45) Mention de la délivrance du brevet :
**05.10.83 Bulletin 83/40**

(84) Etats contractants désignés :
**DE GB IT NL**

(56) Documents cités :
**FR A 2 081 135**
**FR A 2 413 266**
**US A 2 323 385**
**US A 2 621 004**
**US A 2 921 759**

(73) Titulaire : **Société Nationale Industrielle Aérospatiale**
**Société anonyme dite:**
**37 Bld de Montmorency**
**F-75016 Paris (FR)**

(72) Inventeur : **Faibish, David**
**3, rue du Capitaine Olchanski**
**75016 Paris (FR)**

(74) Mandataire : **Bonnetat, Christian et al**
**Cabinet PROPI Conseils 23 rue de Léningrad**
**F-75008 Paris (FR)**

Jambe d'atterrissage pour train d'atterrissage principal d'aéronef

La présente invention concerne les trains d'atterrissage principaux d'aéronefs.

On connaît déjà, pour un train d'atterrissage principal d'aéronef du type comportant deux atterrisseurs à jambes à relevage au moins sensiblement latéral disposés symétriquement de part et d'autre de l'axe longitudinal dudit aéronef, des jambes comportant chacune un fût par rapport auquel peut coulisser de façon télescopique, sous le contrôle de moyens amortisseurs, une tige saillante coaxiale dont l'extrémité libre est pourvue d'au moins une roue, et un compas reliant ledit fût et la tige pour assurer le coulissement sans rotation de celle-ci par rapport au fût. Le compas est relié au fût et à la tige grâce à des moyens d'attache, tels que des pattes ou des chapes, qui en sont solidaires. Par ailleurs, des moyens d'articulation, tels que des tourillons sont prévus à l'extrémité du fût opposée à ladite tige, pour articuler lesdites jambes sur la cellule de l'aéronef.

Bien entendu, afin de réduire les coûts de fabrication et d'entretien de tels trains d'atterrissage, ainsi que le nombre des pièces à stocker en vue de l'entretien et des réparations, il est avantageux que les jambes situées de part et d'autre de l'axe longitudinal de l'aéronef puissent être interchangées.

A cet effet, on connaît déjà, par le brevet français N° 2 413 266, des jambes d'atterrisseur, dont l'interchangeabilité peut être obtenue grâce à l'utilisation d'une douille dont l'alésage interne est désaxé et qui permet de monter la fusée dans deux positions différentes, selon qu'une jambe est utilisée à droite ou à gauche.

Un tel montage ne peut être utilisé que si l'ensemble du fût comporte un plan de symétrie passant par l'axe des tourillons.

La présente invention a pour objet de permettre l'interchangeabilité des jambes gauche et droite sans nécessiter un plan de symétrie passant par l'axe des tourillons. Elle concerne un train d'atterrissage dont les jambes gauche et droite peuvent être permutées grâce au fait qu'elles comportent un plan de symétrie perpendiculaire à l'axe des tourillons. Elle concerne donc tout particulièrement les jambes de type télescopique.

A cette fin, selon l'invention, une jambe d'atterrisseur pour train d'atterrissage principal d'aéronef, du type comportant deux atterrisseurs à jambes à relevage au moins sensiblement latéral disposés symétriquement de part et d'autre de l'axe longitudinal dudit aéronef, cette jambe comportant un fût par rapport auquel peut coulisser de façon télescopique une tige saillante coaxiale et un compas reliant le fût et la tige pour assurer le coulissement sans rotation de celle-ci par rapport audit fût, tandis que des moyens d'attache pour ledit compas sont prévus sur le fût et sur la tige et que des moyens d'articulation de la jambe sur la cellule de l'aéronef sont prévus à l'extrémité du fût opposée à ladite tige, est remarquable en ce qu'elle comporte deux ensembles de moyens d'attache permettant de fixer ledit compas, au choix, dans l'une ou l'autre de deux positions symétriques par rapport à un plan passant par l'axe du fût et de la tige et en ce qu'au moins la configuration du fût de ladite jambe, y compris lesdits moyens d'attache et d'articulation, est symétrique par rapport audit plan.

Ainsi, par rotation de la jambe autour dudit axe, la jambe selon l'invention peut être utilisée soit à droite, soit à gauche, quitte à modifier la position du compas sur la jambe pour le disposer du côté de ladite jambe, pour lequel la transmission d'efforts est favorisée.

Dans un mode de réalisation avantageux, dans lequel l'axe d'articulation d'une jambe sur la cellule est incliné sur l'axe longitudinal de l'aéronef, les moyens d'attache prévus sur le fût forment entre eux un angle obtus dont la valeur est telle que le compas puisse être disposé, dans les deux positions, dans un plan vertical parallèle à l'axe longitudinal de l'aéronef, tandis que les moyens d'attache prévus sur ladite tige sont diamétralement opposés l'un par rapport à l'autre. Ainsi, les roues des atterrisseurs peuvent être maintenues parallèles à l'axe longitudinal de l'aéronef, en prévoyant de plus une rotation relative de la tige par rapport au fût, autour de leur axe commun.

De façon connue, lesdits moyens d'articulation de la jambe sur la cellule de l'aéronef peuvent être constitués par des tourillons définissant un axe d'articulation et disposés aux extrémités d'une traverse solidaire de la partie dudit fût opposée à ladite tige. Dans ce cas, ladite traverse est donc orthogonale audit plan de symétrie et lesdits tourillons sont alignés.

De façon également connue, le compas peut comporter deux branches articulées dont les extrémités libres sont pourvues de chapes. Dans ce cas, chaque ensemble de moyens d'attache peut être constitué de deux bossages plats, destinés à coopérer avec lesdites chapes, les deux bossages du fût étant respectivement symétriques par rapport au plan de symétrie de l'ensemble, tandis que les deux bossages de la tige peuvent être diamétralement opposés l'un à l'autre.

La traverse de la jambe peut être rendue solidaire du fût par l'intermédiaire de nervures latérales, symétriques par rapport audit plan de symétrie. Par ailleurs, le fût, par exemple au niveau desdites nervures, peut comporter des tourillons supplémentaires, également symétriques l'un de l'autre, destinés à l'accrochage de contre-fiches.

Les figures du dessin annexé feront bien comprendre comment l'invention peut être réalisée.

La figure 1 est une vue, de l'arrière et du côté intérieur, d'une jambe gauche pour un train d'atterrissage selon l'invention.

La figure 2 est une vue, de l'arrière et du côté extérieur, de la jambe de la figure 1.

La figure 3 est une vue de dessus schématique d'un train d'atterrissage selon l'invention, les compas étant supposés ôtés pour des fins de clarté.

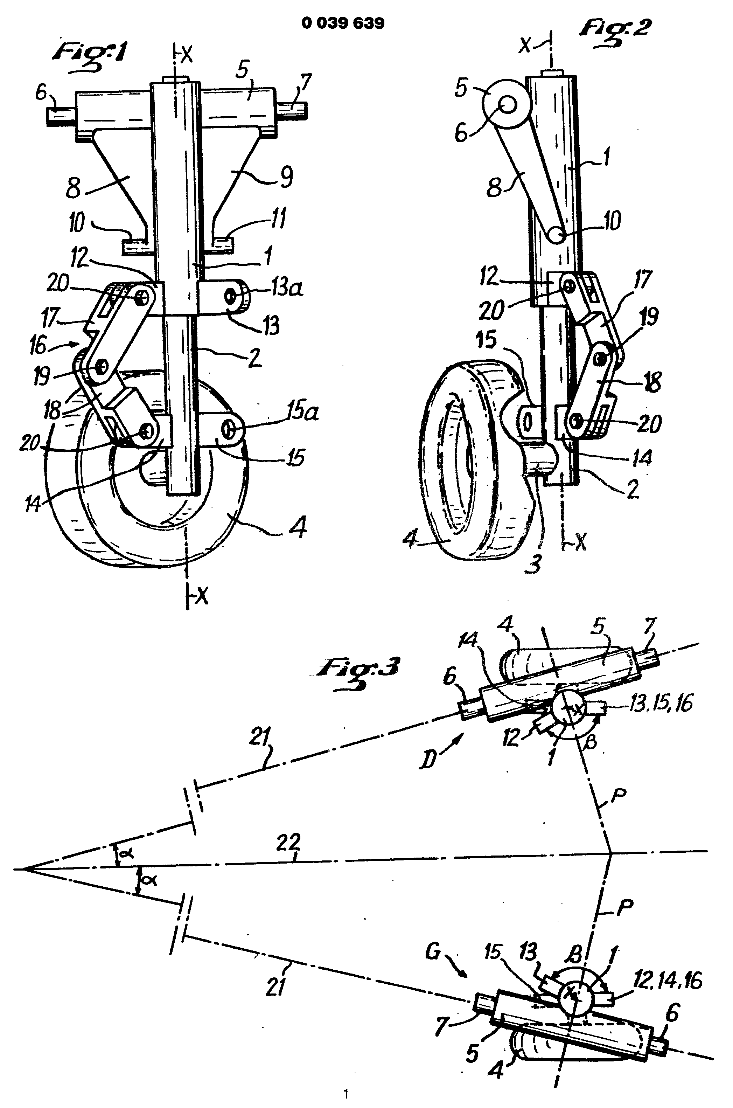

La jambe de train d'atterrissage selon l'invention, montrée par les figures 1 et 2, comporte l'agencement télescopique d'un fût cylindrique 1 et d'une tige coaxiale 2. Dans le fût 1 est prévu un amortisseur hydraulique (non représenté) pour contrôler le coulissement de la tige par rapport audit fût.

La partie inférieure de la tige 2 est solidaire d'un porte-moyeu 3, pour au moins une roue 4.

La partie supérieure du fût 1 est solidaire d'une traverse 5, pourvue de tourillons coaxiaux 6 et 7 à ses extrémités. Ces tourillons permettent de fixer librement en rotation, par l'intermédiaire de paliers non représentés, la jambe de train d'atterrissage selon l'invention, sur la cellule d'un aéronef, et notamment sous la voilure principale. La traverse 5 est rendue solidaire du fût 1, notamment par l'intermédiaire de nervures 8 et 9, comportant à leur partie inférieure, respectivement des tourillons supplémentaires 10 et 11. L'un de ces tourillons 10 et 11 permet l'accrochage d'une contre-fiche (non représentée) par l'intermédiaire d'un palier, tandis que l'autre peut servir à la fixation d'une trappe destinée à obturer le logement de la jambe dans la cellule de l'aéronef et/ou à l'accrochage de la jambe, lorsque le train d'atterrissage est rétracté dans ledit logement.

La partie inférieure du fût 1 comporte deux bossages plats 12 et 13 identiques, pourvus chacun d'un alésage 12a ou 13a. De même, la partie inférieure de la tige 2 comporte deux bossages plats 14 et 15 identiques, pourvus chacun d'un alésage 14a ou 15a.

Selon une particularité de l'invention, les éléments 6, 8, 10 et 12 sont respectivement symétriques des éléments 7, 9, 11 et 13 par rapport à un plan P passant par l'axe X-X et orthogonal à la traverse 5. Par ailleurs, les bossages 14 et 15 sont diamétralement opposés l'un à l'autre, de sorte que par une rotation relative de la tige 2 par rapport au fût 1 autour de l'axe X-X, on peut amener dans un même plan soit les bossages 12 et 14, soit les bossages 13 et 15 (voir la figure 3).

Un compas 16, comportant deux bras 17 et 18 articulés en 19 et pourvus de chapes à leurs extrémités libres, peut être monté, soit entre les bossages 12 et 14, soit entre les bossages 13 et 15 amenés respectivement dans le même plan, par coopération desdites chapes avec ces bossages et mise en place de goujons 20, à montage et démontage rapides, traversant les alésages 12a, 13a, 14a et 15a respectivement, ainsi que des alésages correspondant desdites chapes.

Avantageusement, le compas 16 est monté du côté de la jambe 1, 2, favorisant la transmission d'efforts de la roue 4 vers le fût 1.

Ainsi, comme le montre la figure 3 et si les roues 4 doivent être dirigées vers l'extérieur, le compas 16 de la jambe gauche G sera monté entre les bossages 12 et 14 (comme sur les figures 1 et 2), alors que le compas 16 de la jambe droite D sera monté entre les bossages 13 et 15, les jambes D et G étant par ailleurs identiques, mais tournées l'une par rapport à l'autre autour de l'axe X-X, avec rotation relative de la tige 2 dans le fût 1.

De façon usuelle, les jambes D et G sont articulées à la cellule de l'aéronef de façon que les axes d'articulation 21 (définis par les tourillons 6 et 7) forment un angle α par rapport à l'axe longitudinal 22 dudit aéronef. Dans ce cas, il est avantageux que les bossages 12 et 14 pour la jambe gauche G et 13 et 15 pour la jambe droite D soient parallèles à l'axe 22. Cela signifie donc que l'angle β entre les bossages 12 et 13 doit être égal à β = 180°-2 α.

On voit donc que grâce à l'invention, les jambes G et D sont facilement interchangeables, seule la position du compas 16 devant être différente, celui-ci étant monté selon le cas entre les bossages 12 et 14 ou entre les bossages 13 et 15. Un tel montage est rapidement effectué par mise en place des goujons 20.

Le bossage 12 ou 13 inutilisé pour la fixation du compas 16 peut servir, éventuellement en coopération avec le tourillon 10 et 11, par exemple à la fixation d'une trappe.

De même, le bossage 14 ou 15 inutilisé pour la fixation du compas 16 peut servir à l'accrochage d'un outillage de remorquage ou de désembourbage.

Bien entendu, la jambe selon l'invention peut être équipée de roues jumelées montées en « diabolo », plutôt que de ne comporter qu'une seule roue, comme montré sur le dessin.

**Revendications**

1. Jambe d'atterrisseur pour train d'atterrissage principal d'aéronef, du type comportant deux atterrisseurs à jambes à relevage au moins sensiblement latéral disposés symétriquement de part et d'autre de l'axe longitudinal dudit aéronef, cette jambe comportant un fût (1) par rapport auquel peut coulisser de façon télescopique une tige saillante coaxiale (2) et un compas (17, 18,19) reliant le fût (1) et la tige (2) pour assurer le coulissement sans rotation de celle-ci, tandis que des moyens d'attache pour ledit compas sont prévus sur le fût et sur la tige et que des moyens d'articulation de la jambe sur la cellule de l'aéronef sont prévus à l'extrémité du fût opposée à ladite tige, caractérisée en ce qu'elle comporte deux ensembles de moyens d'attache (12, 14 et 13, 15) permettant de fixer ledit compas (17, 18, 19), au choix, dans l'une ou l'autre de deux positions symétriques par rapport à un plan (P) passant par l'axe X-X du fût (1) et de la tige (2) et en ce qu'au moins la configuration du fût (1) de ladite jambe, y compris ses moyens d'attache (12, 13) et d'articulation (6, 7), est symétrique par rapport audit plan.

2. Jambe d'atterrisseur selon la revendication 1, dont l'axe d'articulation sur la cellule de l'aéronef est incliné sur l'axe longitudinal de l'aéronef, caractérisée en ce que les moyens d'attache (12, 13) prévus sur le fût forment entre eux un angle obtus β dont la valeur est telle que le compas puisse être disposé, dans les deux positions, dans un plan vertical parallèle à l'axe longitudinal (22) de l'aéronef, tandis que les moyens d'attache (14, 15) prévus sur la tige (2) sont diamétralement opposés l'un par rapport à l'autre.

3. Jambe d'atterrisseur selon l'une des revendications 1 ou 2, dans laquelle lesdits moyens d'articulation sont constitués par des tourillons (6, 7) définissant un axe d'articulation et disposés aux extrémités d'une traverse (5) solidaire de la partie dudit fût opposée à ladite tige, caractérisée en ce que ladite traverse (5) est orthogonale audit plan de symétrie et en ce que lesdits tourillons (6, 7) sont coaxiaux.

4. Jambe d'atterrisseur selon l'une des revendications 1 à 3, dans laquelle le compas comporte deux branches articulées dont les extrémités libres sont pourvues de chapes, caractérisée en ce que chaque ensemble de moyens d'attache (12, 13, 14, 15) est constitué de deux bossages plats, destinés à coopérer avec lesdites chapes, les deux bossages (12, 13) du fût (1) étant respectivement symétriques par rapport au plan de symétrie de l'ensemble, tandis que les deux bossages (14, 15) de la tige sont diamétralement opposés l'un à l'autre.

5. Jambe d'atterrisseur selon l'une des revendications 3 ou 4, caractérisée en ce que la traverse (5) est rendue solidaire du fût (1) par l'intermédiaire de nervures latérales (8, 9) symétriques par rapport audit plan de symétrie.

6. Jambe d'atterrisseur selon l'une des revendications 3 à 5, caractérisée en ce que des tourillons supplémentaires (10, 11), également symétriques l'un de l'autre, sont prévus sur le fût (1).

7. Jambe d'atterrisseur selon l'une des revendications 1 à 6, dans laquelle l'axe d'articulation (21) d'une jambe sur la cellule de l'aéronef fait un angle α avec l'axe longitudinal (22) de celui-ci, caractérisée en ce que les moyens d'attache (12, 13) du fût (1) font entre eux un angle dièdre β égal à 180°-2 α.

**Claims**

1. Leg for the main landing gear of an aircraft, of the type comprising two undercarriages having legs lifted in an at least substantially lateral direction, disposed symmetrically on either side of the longitudinal axis of said aircraft, this leg comprising a strut (1) with respect to which a coaxial projecting rod (2) may slide telescopically, and torque links (17, 18, 19) in the form of scissors connecting the strut (1) and the rod (2) to ensure slide without rotation of the latter, whilst means for fastening said torque links are provided on the strut and on the rod and means for pivotal connection of the leg on the airframe are provided at the end of the strut opposite said rod, characterized in that said leg comprises two assemblies of fastening means (12, 14 and 13, 15) enabling said torque links (17, 18, 19) to be fixed, as desired, in one or the other of two symmetrical positions with respect to a plane (P) passing through the axis of the strut (1) and of the rod (2) and in that at least the configuration of the strut (1) of said leg, including its fastening (12, 13) and pivotal connection means (6, 7), is symmetrical with respect to said plane.

2. The landing gear leg of claim 1, of which the pivot axis thereof on the airframe is inclined with respect to the longitudinal axis of the aircraft, characterized in that the fastening means (12, 13) provided on the strut form an obtuse angle β of which the value is such that the torque links may be disposed, in the two positions, in a vertical plane parallel to the longitudinal axis (22) of the aircraft, whilst the fastening means (14, 15) provided on the rod (2) are diametrically opposite each other.

3. The landing gear leg of one of claims 1 or 2, in which said pivotal connection means are constituted by trunnions (6, 7) defining a pivot axis and disposed at the ends of a cross beam (5) fast with that part of said strut opposite said rod, characterized in that said cross beam (5) is at right angles to said plane of symmetry and in that said trunnions (6, 7) are coaxial.

4. The landing gear leg of one of claims 1 to 3, in which the torque links comprise two articulated arms of which the free ends are provided with fork joints, characterized in that each assembly of fastening means (12, 13, 14, 15) is constituted by two flat bosses, adapted to cooperate with said fork joints, the two bosses (12, 13) of the strut (1) being respectively symmetrical with respect to the plane of symmetry of the assembly, whilst the two bosses (14, 15) of the rod are diametrically opposite each other.

5. The landing gear leg of one of claims 3 or 4, characterized in that the cross beam (5) is rendered fast with the strut (1) via lateral ribs (8, 9) symmetrical with respect to said plane of symmetry.

6. The landing gear leg of one of claims 3 to 5, characterized in that additional trunnions (10, 11), likewise symmetrical to each other, are provided on the strut (1).

7. The landing gear leg of one of claims 1 to 6, in which the pivot axis (21) of a leg on the airframe makes an angle α with the longitudinal axis (22) of said airframe, characterized in that the fastening means (12, 13) of the strut (1) make a dehedral angle β equal to 180°-2 α.

**Ansprüche**

1. Fahrgestellbein für das Fahrwerk, hauptsächlich von Flugzeugen, die zwei Fahrgestelle mit zumindest allgemein seitlich einziehbaren Beinen aufweisen, die beiderseits der Flugzeuglängsachse symmetrisch angeordnet sind, wobei das Bein einen Schaft (1), dem gegenüber eine koaxial heraustretende Stange (2) teleskopartig gleiten kann, und ein, den Schaft (1) und die Stange verbindendes Gestänge (17, 18, 19) besitzt, das die Führung ohne eine Drehung derselbigen sichert, wobei Befestigungsmittel für das Gestänge auf dem Schaft und der Stange und Anlenkungen des Beins auf dem Flugzeugkörper am der Stange gegenüber liegenden Schaftende vorgesehen sind, gekennzeichnet durch zwei Halterungssätze (12, 14 und 13, 15), durch die das Gestänge (17, 18, 19) nach Wahl in der einen oder anderen von zwei zu einer Ebene (P) symmetrischen Positionen fixiert werden kann, die durch die Achse X-X von Schaft (1) und Stange (2) läuft, und dadurch, daß zumindest die Gestaltung des Schafts (1) vom Bein mitsamt den Halterungen (12, 13) und der Anlenkung (6, 7) zu dieser Ebene symmetrisch ist.

2. Fahrgestellbein nach Anspruch 1 mit einer Gelenkachse am Flugzeugkörper, die zur Flugzeuglängsachse geneigt ist, dadurch gekennzeichnet, daß die am Schaft (1) vorgesehenen Halterungen (12, 13) zwischen sich einen stumpfen Winkel β bilden, dessen Größe so bemessen ist, daß das Gestänge in den beiden Stellungen in einer vertikalen Ebene parallel zur Fluglängsachse (22) angeordnet werden kann, während die Halterungen (14, 15), die auf der Stange (2) vorgesehen sind, zueinander diametral entgegengesetzt liegen.

3. Fahrgestellbein nach einem der Ansprüchen 1 oder 2 mit Anlenkungen aus Drehzapfen (6, 7), die einen Gelenkbolzen bilden und an den Enden einer fest mit dem Teil des der Stange gegenüberliegenden Schafts verbundenen Traverse (5) angeordnet sind dadurch gekennzeichnet, daß die Traverse (5) orthogonal zur Symmetrieebene liegt und daß die Drehzapfen (6, 7) koaxial verlaufen.

4. Fahrgestellbein nach einem der Ansprüchen 1 bis 3 mit einem Gestänge aus zwei Gelenkschenkeln, deren freie Enden Augen aufweisen, dadurch gekennzeichnet, daß jeder Halterungssatz (12, 13, 14, 15) zwei flache Vorsprünge hat, die mit den Augen zusammenarbeiten, wobei beide Vorsprünge (12, 13) des Schafts (1) zur Symmetrieebene des Satzes jeweils symmetrisch sind und dagegen die beiden Vorsprünge (14, 15) der Stange einander diametral gegenüberliegen.

5. Fahrgestellbein nach einem der Ansprüche 3 oder 4, dadurch gekennzeichnet, daß die Traverse (5) mittels Seitenrippen (8, 9) mit dem Schaft (1) formschlüssig verbunden ist, die zur Symmetrieebene symmetrisch angeordnet sind.

6. Fahrgestellbein nach einem der Ansprüche 3 bis 5, dadurch gekennzeichnet, daß die Zusatzzapfen (10, 11), die ebenfalls symmetrisch zueinander liegen, auf dem Schaft (1) vorgesehen sind.

7. Fahrgestellbein nach einem der Ansprüche 1 bis 6 mit einem Gelenkbolzen (21) eines am Fahrzeugkörper befestigten Beins, das mit dessen Längsachse (22) einen Winkel α bildet, dadurch gekennzeichnet, daß die Halterungen (12, 13) des Schafts (1) zwischen sich einen Flächenwinkel β bilden, der gleich ist 180°-2 α.

0 039 639

Fig.1

Fig.2

Fig.3